## Europäisches Patentamt

## European Patent Office

## Office européen des brevets

(19)

(11) Veröffentlichungsnummer: **0 031 892**
**B1**

(12) **EUROPÄISCHE PATENTSCHRIFT**

(45) Veröffentlichungstag der Patentschrift:
28.09.83

(51) Int. Cl.³: **A 22 C 13/02**

(21) Anmeldenummer: **80107298.4**

(22) Anmeldetag: **23.11.80**

(54) **Verfahren und Vorrichtung zum axialen Raffen von dünnwandigem aufgeblasenem Schlauchmaterial, insbesondere für die Wurstherstellung.**

(30) Priorität: **29.12.79 DE 2952715**

(43) Veröffentlichungstag der Anmeldung:
**15.07.81 Patentblatt 81/28**

(45) Bekanntmachung des Hinweises auf die Patenterteilung:
**28.09.83 Patentblatt 83/39**

(84) Benannte Vertragsstaaten:
**AT BE CH FR GB IT LI NL SE**

(56) Entgegenhaltungen:
**DE-A-1 632 137**
**DE-B-1 253 093**
**FR-A-1 311 092**
**US-A-3 209 398**

(73) Patentinhaber: **Kollross, Günter, Am Wallerstädter Weg 20, D-6080 Gross Gerau-Dornheim (DE)**

(72) Erfinder: **Kollross, Günter, Am Wallerstädter Weg 20, D-6080 Gross Gerau-Dornheim (DE)**

(74) Vertreter: **Beyer, Werner, Dipl.-Ing., Staufenstrasse 36, II P.O. Box 174109, D-6000 Frankfurt/Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren und Vorrichtung zum axialen Raffen von dünnwandigem aufgeblasenem Schlauchmaterial, insbesondere für die Wurstherstellung

Die Erfindung betrifft ein Verfahren zum axialen Raffen von dünnwandigem aufgeblasenem Schlauchmaterial, insbesondere für die Wurstherstellung, bei welchem das Schlauchmaterial in seinem Inneren radial abgestützt und von einer auf seiner Außenseite um die Schlauchachse ortsfest rotierenden Kraft unter Bildung regelmäßiger Falten gegen eine Gegenkraft axial verdichtet wird, sowie eine Vorrichtung zur Durchführung eines solchen Verfahrens.

Es sind zahlreiche Verfahren und Vorrichtungen bekannt, um große Längen dünnwandiger Schläuche aus Zellulose oder Kunststoff einem Rohr in eine handliche Form zusammenzuraffen, in welcher sie mit Hilfe geeigneter Füllmaschinen rationell mit pastösen Massen gefüllt werden können. Das Rohr dient dazu, den Schlauch während des Raffvorganges radial zu stützen und dabei der beim Raffen entstehenden Schlauchraupe einen bestimmten Innendurchmesser zu geben. Außerdem wird der Schlauch während des Raffvorgangs durch das Rohr hindurch leicht aufgeblasen, um ihm die für den Angriff der Raffkräfte erforderliche pralle Gestalt zu geben. Die Mittel zum Raffen des Schlauches sind im allgemeinen gezahnte Räder oder an umlaufenden Ketten befestigte Mitnehmer.

Es ist auch bereits bekannt, die das Schlauchmaterial axial verdichtende Kraft mit Hilfe einer innen schraubenförmig verzahnten rotierenden Hülse aufzubringen, die das Schlauchmaterial umschließt. Alle diese Vorrichtungen leiden unter dem Nachteil, daß sie das Schlauchmaterial mechanisch unmittelbar erfassen und mehr oder weniger stark beanspruchen. Besonders bei dünnwandigen Naturfaserschläuchen auf Kollagenbasis besteht deshalb die Gefahr, daß das Schlauchmaterial während des Raffens unbemerkt beschädigt wird.

Es ist auch bereits vorgeschlagen worden (z. B. DE-A-1 632 137), bei nur ganz schwach gezahnten Raffrädern das Schlauchmaterial in die Zahnlücken zu saugen und dadurch sicher in Raffrichtung mitzunehmen. Auch dabei ist eine mechanische Berührung zwischen den Raffrädern mit dem Schlauchmaterial zur Ausübung einer gegen das Widerlager gerichteten Kraftkomponente gegeben, die insbesondere unter der Wirkung der Saugkräfte zu unerwünschten Beschädigungen des Schlauchmaterials führen kann.

Der Erfindung liegt deshalb die Aufgabe zugrunde, ein Verfahren sowie eine Vorrichtung der eingangs genannten Art zu schaffen, mit welchem jegliche Gefahr einer mechanischen Beschädigung ausgeschlossen wird.

Im Rahmen der Erfindung wird diese Aufgabe verfahrensmäßig dadurch gelöst, daß die Kraft von mindestens einem schräg gegen die Schlauchachse gerichteten Luftstrahl aufgebracht wird.

Mit dem erfindungsgemäßen Verfahren wird somit jegliche mechanische Berührung des Schlauchmaterials beim Raffen vermieden, und das Schlauchmaterial wird stattdessen pneumatisch eingekerbt und in schraubenförmige Falten gelegt. Dabei ist es möglich, durch Veränderung des Luftdruckes und der Umlaufgeschwindigkeit des Luftstrahls während des Raffvorgangs die Faltenbildung zu beeinflussen und ein optimales Faltenbild zu erzeugen. Dies wird weiterhin in vorteilhafter Ausgestaltung des erfindungsgemäßen Verfahrens dadurch begünstigt, daß der Winkel, unter welchem der Luftstrahl gegen die Schlauchachse trifft, veränderbar ist.

Wie Versuche gezeigt haben, kann die Faltenbildung weiterhin dadurch begünstigt werden, daß dem Luftstrahl ein in Umfangsrichtung länglicher Querschnitt erteilt wird. Ganz besonders zweckmäßig ist es hierbei, wenn der Querschnitt des Luftstrahls einer Schraubenlinie um die Schlauchachse folgt.

Bei kleinen Schlauchkalibern (Schlauchdurchmessern) wird im allgemeinen ein rotierender Luftstrahl genügen. Bei größeren Schlauchkalibern kann es hingegen vorteilhaft sein, wenn zwei oder mehr Luftstrahlen am Schlauchumfang verteilt sind und gleichzeitig den Schlauch erfassen, so daß die Falten in Gestalt einer mehrgängigen Schraube gebildet werden.

Die Faltenbildung läßt sich weiterhin auch dadurch begünstigen, daß das Schlauchmaterial von mindestens einem den faltenbildenden Luftstrahl axial vorausgehenden und mit diesem rotierenden weiteren Luftstrahl vorgefältelt wird.

Eine Vorrichtung zur Durchführung des erfindungsgemäßen Verfahrens mit einem das Schlauchmaterial axial durchsetzenden rohrförmigen Dorn, einem das geraffte Schlauchende erfassenden und beim Raffen zurückweichenden Widerlagers sowie mit Rafforganen, die auf die Außenseite des Schlauchmaterials einem um die Schlauchachse ortsfest rotierende, gegen das Widerlager gerichtete Kraftkomponente ausüben, zeichnet sich in erfindungsgemäßer Ausbildung dadurch aus, daß die Rafforgane entweder als mindestens eine an eine Druckluftquelle anschließbare, schräg gegen die Dornachse geneigte und um die Dornachse ortsfest rotierende Blasdüse oder durch einen Kranz von um die Dornachse regelmäßig ortsfest verteilten, gegen diese geneigten Blasdüsen, die in Umfangsrichtung fortschreitend auf- und zusteuerbar sind, ausgebildet sind.

Weitere Merkmale zur vorteilhaften Ausgestaltung der erfindungsgemäßen Vorrichtung ergeben sich aus den übrigen Unteransprüchen.

Die Erfindung wird nachstehend an Hand einiger in der Zeichnung dargestellter Ausführungsbeispiele näher erläutert. Es zeigt

Fig. 1 einen Axialschnitt durch eine erste Ausführungsform der Erfindung mit einer um die Längsachse des zu raffenden Schlauchmaterials rotierenden Düse,

Fig. 2 eine Seitenansicht der Vorrichtung nach Fig. 1, in Richtung des dortigen Pfeils II betrachtet,

Fig. 3 eine andere Ausgestaltungsform der Vorrichtung mit zwei um 180° zueinander versetzten Düsen und

Fig. 4 einen Axialschnitt durch eine mit Hilfe einer Kugelpfannenlagerung einstellbaren Düse.

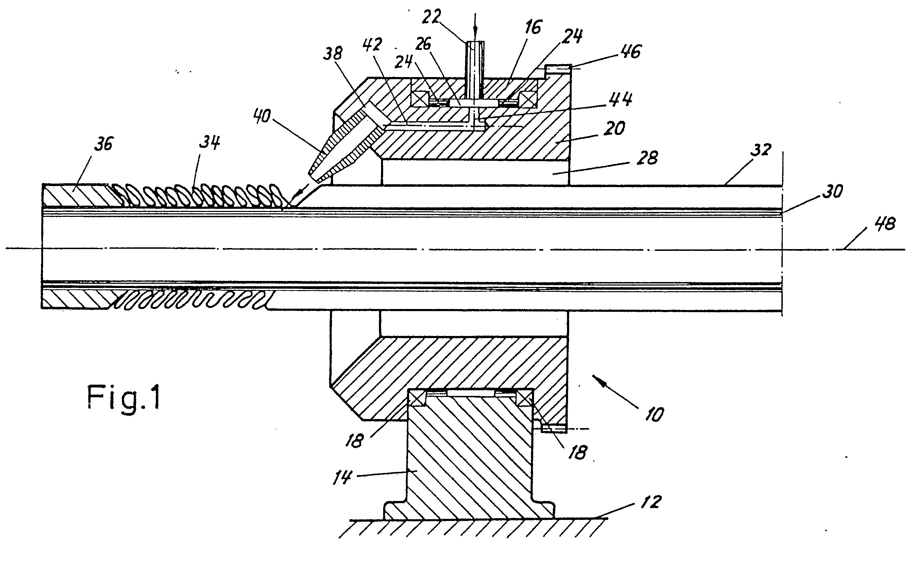

Die in Fig. 1 gezeigte und in ihrer Gesamtheit mit 10 bezeichnete Vorrichtung besteht aus einem auf einem Maschinenbett 12 befestigten Ständer 14, der an seiner Oberseite halbschalenförmig ausgenommen ist und mit einem halbschalenförmigen Deckel 16 eine Lagerschale bildet, in welcher mittels Kugellagern 18 ein rotierendes Düsengehäuse 20 gelagert ist. Der Deckel 16 hat einen Druckluftanschluß 22, der in einen von Dichtungen 24 begrenzten Ringraum 26 am Außenumfang des Düsengehäuses 20 mündet.

Das Düsengehäuse 20 umschließt mit einer zentralen Bohrung 28 einen im Durchmesser wesentlich kleineren rohrförmigen Dorn 30, auf welchem das zu raffende Schlauchmaterial 32 aufgezogen ist und in nachträglich beschriebener Weise in Falten 34 gegen ein beim Raffen stetig zurückweichendes Widerlager 36 gelegt wird.

An dem gegen das Widerlager 36 gerichteten Ende ist die Bohrung 28 konisch aufgeweitet und nimmt in einer schräg nach auswärts gerichteten Gewindebohrung 38 eine Düse 40 auf, die über eine Axialbohrung 42 und eine Radialbohrung 44 innerhalb des Düsengehäuses 20 mit Ringraum 26 in Verbindung steht.

Am anderen Ende trägt das Düsengehäuse 20 an seiner Außenseite eine Verzahnung 46, an welcher ein (nicht gezeigter) Antriebsmotor, vorzugsweise über einen Zahnriemen (gleichfalls nicht gezeigt) angreift.

Wenn der Antriebsmotor eingeschaltet wird und über den Anschluß 22 Druckluft zugeführt wird, tritt aus der um die Achse 48 des Raffrohrs 30 rotierende Düse ein schräg gegen die Achse 48 gerichteter Luftstrahl aus, der das Schlauchmaterial 32 fortlaufend an seinem Umfang einkerbt und in schraubenförmige Falten 34 um den Dorn 30 gegen das Widerlager 36 legt.

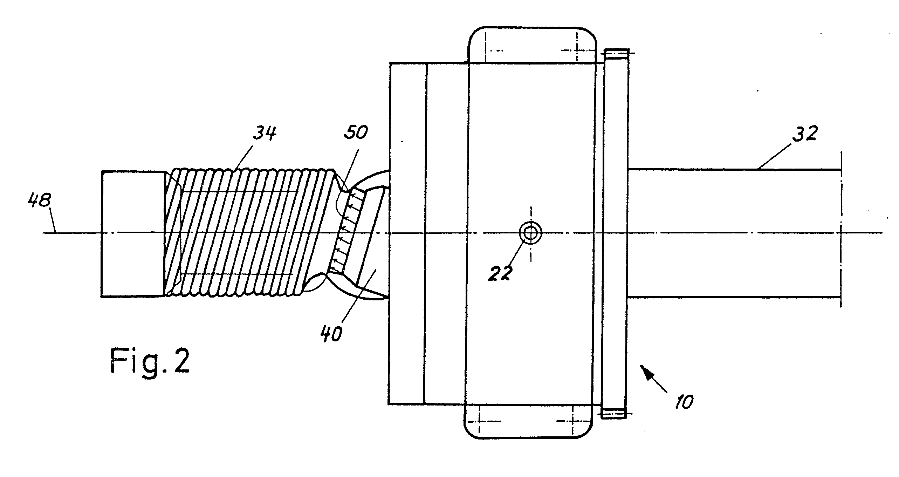

Wie Fig. 2 zeigt, kann die Düse zweckmäßig als Fachdüse ausgebildet sein, die mit der Längserstreckung ihres Öffnungsquerschnitts unter einem spitzen Winkel zu einer von der Dornachse 48 normal durchsetzten Querebene angeordnet ist, so daß die laggestreckte Düsenmündung 40 auf einer Schraubenlinie zu liegen kommt, die den schraubenförmig entstehenden Falten 34 entspricht. Der spitze Winkel kann hierbei einstellbar sein.

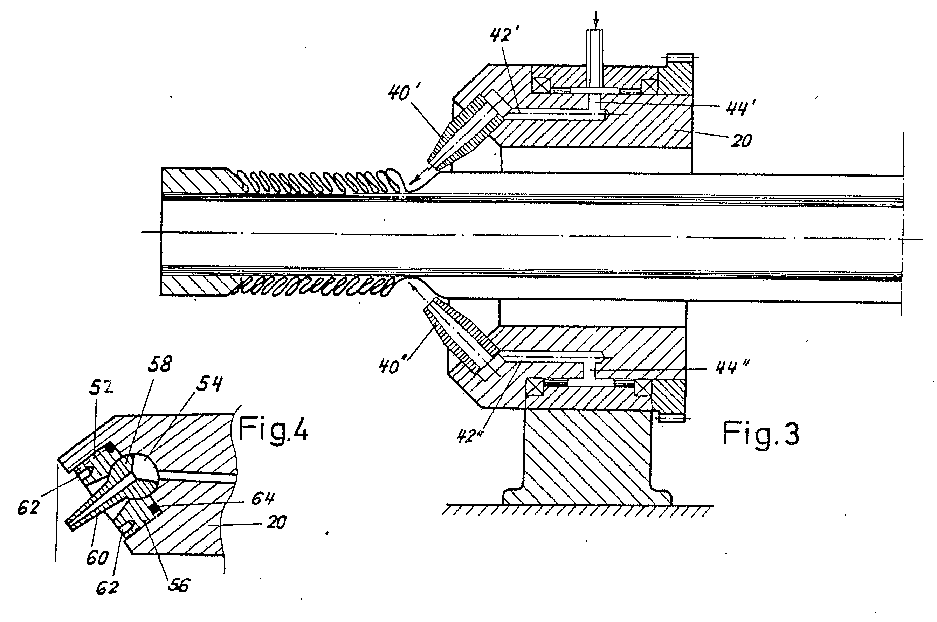

Fig. 3 zeigt eine ähnlich ausgebildete Vorrichtung, bei welcher jedoch zwei Düsen 40' und 40'' im Düsengehäuse 20 angeordnet sind. Der übrige Aufbau ist der gleiche wie bei der Ausführungsform nach Fig. 1 und 2.

Da bei der Vorrichtung nach Fig. 2 das Schlauchmaterial gleichzeitig an zwei diametral gegenüberliegenden Stellen eingekerbt und in Falten gelegt wird, entstehen bei der Drehung der Düsen um die Achse 48 natürlich zwei Schraubengänge, auf denen die Falten zu liegen kommen.

Auch bei der Ausführungsform nach Fig. 3 können die Düsen als Flachdüsen ausgebildet sein, die sich vorzugsweise mit ihrer Öffnung auf einer Schraubenlinie erstrecken.

Während bei den Ausführungsbeispielen nach Fig. 1 bis 3 die Düsen unverstellbar am Düsengehäuse 20 angeordnet sind, zeigt Fig. 4 ein Beispiel einer verstellbaren Düsenbefestigung, mit welcher in erster Linie der Austrittswinkel der Düse gegenüber der Dornachse 48 verstellt werden kann. Zu diesem Zweck enthält das Düsengehäuse 20 im aufgeweiteten Bereich der Bohrung 28 eine verhältnismäßig große Gewindebohrung 52, an deren Boden eine Kugelpfanne 54 ausgebildet ist. In die Bohrung 52 ist ein Klemmring 56 einschraubbar, dessen Bohrung am inneren Ende ebenfalls kugelpfannenförmig und am äußeren Ende entgegengesetzt konisch ausgebildet ist. Zwischen der Kugelpfanne 54 und dem Klemmring 56 ist der kugelige Kopf 58 einer Düse 60 eingespannt, die durch Lösen des Klemmrings 56 mittels eines an diametralen Bohrungen 62 angreifenden Schlüssels und erneutes Festziehen in ihrer Richtung verstellt werden kann. Ein O-Ring 64 verhindert den Austritt von Streuluft zwischen der Gewindebohrung 52 und dem Klemmring 56.

Die Düse 60 kann eine zylindrische Düsenbohrung enthalten. Sie kann aber auch bei entsprechender Bemessung mit einem flachen Austrittsschlitz versehen sein, der durch Lösen und erneutes Anziehen des Klemmrings 56 in seiner Lage der Schraubenform der gewünschten Falten angepaßt werden kann.

**Patentansprüche**

1. Verfahren zum axialen Raffen von dünnwandigem aufgeblasenem Schlauchmaterial, insbesondere für die Wurstherstellung, bei welchem das Schlauchmaterial in seinem Inneren radial abgestützt und von einer auf seiner Außenseite um die Schlauchachse ortsfest rotierenden Kraft unter Bildung regelmäßiger Falten gegen eine Gegenkraft axial verdichtet wird, dadurch gekennzeichnet, daß die Kraft von mindestens einem schräg gegen die Schlauchachse gerichteten Blasluftstrahl aufgebracht wird.

2. Verfahren nach Anspruch 1, dadurch gekennzeichnet, daß der Winkel, unter welchem der Luftstrahl gegen die Schlauchachse trifft, veränderbar ist.

3. Verfahren nach Anspruch 1 oder 2, dadurch gekennzeichnet, daß dem Luftstrahl ein in Umfangsrichtung länglicher Querschnitt erteilt wird.

4. Verfahren nach Anspruch 3, dadurch gekennzeichnet, daß der Querschnitt des Luftstrahls einer Schraubenlinie um die Schlauchachse folgt.

5. Verfahren nach einem der vorhergehenden Ansprüche, dadurch gekennzeichnet, daß das Schlauchmaterial von mindestens einem den faltenbildenden Luftstrahl axial vorausgehenden und mit diesem rotierenden weiteren Luftstrahl vorgefältelt wird.

6. Vorrichtung zur Durchführung des Verfahrens nach einem der Ansprüche 1 bis 5 mit einem das Schlauchmaterial axial durchsetzenden rohrförmigen Dorn (30), einem das geraffte Schlauchende erfassenden und beim Raffen zurückweichenden Widerlager (36) sowie mit Rafforganen, die auf die Außenseite des Schlauchmaterials (32) eine um die Schlauchachse (48) ortsfest rotierende, gegen das Widerlager (36) gerichtete Kraftkomponente ausüben, dadurch gekennzeichnet, daß die Rafforgane entweder als mindestens eine an eine Druckluftquelle (22) anschließbare, schräg gegen die Dornachse (48) geneigte und um die Dornachse (48) ortsfest rotierende Blasdüse (40, 40', 40'') oder durch einen Kranz von um die Dornachse regelmäßig ortsfest verteilten, gegen diese geneigten Blasdüsen, die in Umfangsrichtung fortschreitend auf- und zusteuerbar sind, ausgebildet sind.

7. Vorrichtung nach Anspruch 6, dadurch gekennzeichnet, daß der Neigungswinkel der um die Dornachse ortsfest rotierenden Blasdüse (60) zur Dornachse verstellbar ist.

8. Vorrichtung nach Anspruch 6 oder 7, dadurch gekennzeichnet, daß die um die Dornachse ortsfest rotierende Blasdüse als Flachdüse (40) ausgebildet ist.

9. Vorrichtung nach Anspruch 8, dadurch gekennzeichnet, daß die Düse (40) mit der Längserstreckung ihres Öffnungsquerschnitts (50) unter einem spitzen Winkel zu einer von der Dornachse normal durchsetzten Querebene angeordnet ist.

10. Vorrichtung nach Anspruch 9, dadurch gekennzeichnet, daß der spitze Winkel einstellbar ist.

11. Vorrichtung nach Anspruch 6, dadurch gekennzeichnet, daß die Zeitintervalle, in denen mindestens zwei um die Dornachse ortsfest verteilte Blasdüsen auf- und zusteuerbar sind, einander überlappen.

12. Vorrichtung nach Anspruch 6 oder 11, gekennzeichnet durch ein von der Druckluftquelle drehend angetriebenes Ventilglied zum Auf- und Zusteuern der Blasdüsen.

## Claims

1. Method for the axially shirring thin-walled inflated flexible tubular material, especially in sausage making, wherein the flexible tubular material is radially supported in its interior, and is axially compressed against an opposing force by a force rotating in a stationary situation at the outside of the flexible tubular material about the tube axis, forming regular folds, characterised in that the force is is applied by at least one blown air jet directed at an inclination relatively to the tube axis.

2. Method according to claim 1, characterised in that the angle at which the jet if air impinges on the tube axis is variable.

3. Method according to claim 1 or 2, characterised in that the jet of air is given a circumferentially elongated cross-section.

4. Method according to claim 3, characterised in that the cross-section of the jet air follows a helical line about the tube axis.

5. Method according to one of the preceding claims, characterised in that the flexible tubular material is pre-folded by at least one further air jet which axially precedes the fold-forming air jet and rotates therewith.

6. Apparatus for carrying out the method according to one of claims 1 to 5, including a tubular mandrel (30) extending axially through the flexible tubulat material, an abutment (36) which engages the shirred flexible tube end and withdraws as shirring proceeds, and shirring elements which subject the outside of the flexible tubular material (32) to a component of force rotating in a stationary situation about the tube axis (48) and directed towards the abutment (36), characterised in that the shirring elements are formed either as at least one blown nozzle (40, 40', 40'') which is connectable to a compressed air source (22), is inclined relatively to the mandrel axis (48) and is rotating in stationary manner about the mandrel axis (48), or as a ring of blowing nozzles which are distributed in stationary situations regulary about the mandrel axis, are inclined relatively to the said axis, and are adapted to be opened and closed progressively circumferentially.

7. Apparatus according to claim 6, characterised in that the angle of inclination of the blowing nozzle (60) rotating in a stationary situation about the mandrel axis relatively to the mandrel axis is adjustable.

8. Apparatus according to claim 6 or 7, characterised in that the blowing nozzle rotation in stationary manner about the mandrel axis is constructed as a flat nozzle (40).

9. Apparatus according to claim 8, characterised in that the nozzle (40) has the longitudinal extent of its opening cross-section (50) arranged at an acute angle to a transverse plane through which the mandrel axis extends perpendicularly.

10. Apparatus according to claim 9, characterised in that the acute angle is adjustable.

11. Apparatus according to claim 6, characterised in that the intervals of time at which at least two blowing nozzles distributed in stationary situations about the mandrel axis are controlled to open and close, overlap one another.

12. Apparatus according to claim 6 or 11, characterised by a valve device driven in rotational movement by the source of compressed air, for opening and closing the blowing nozzles.

## Revendications

1. Procédé pour plissir axialement un tube cylindrique gonflé, à paroi mince, en particulier pour la fabrication de saucisses, dans lequel la matière tubulaire est supportée radialement de l'intérieur et comprimée axialement par une force fixe tournant autour de l'axe de la matière tubulaire en formant dans celle-ci des plis réguliers contre une force antagoniste, caractérisé en ce que la force est fournie par au moins un jet d'air soufflé dirigé obliquement par rapport à l'axe du tube.

2. Le procédé selon la Revendication 1, caractérisé en ce que l'angle sous lequel le jet d'air soufflé intersecte l'axe de la matière tubulaire est réglable.

3. Le procédé selon l'une ou l'autre des Revendications 1 et 2, caractérisé en ce que le jet d'air soufflé est délivré à travers une section transversale allongée dans le sens circonférentiel.

4. Le procédé selon la Revendication 3, caractérisé en ce que la section transversale du jet d'air soufflé épouse une ligne d'allure hélicoïdale autour de l'axe de la matière tubulaire.

5. Le procédé selon l'une quelconque des Revendications 1 à 4, caractérisé en ce que la matière tubulaire subit un plissage préalable par au moins un jet d'air soufflé supplémentaire qui précède axialement le jet d'air soufflé formant les plis définitifs et qui tourne solidairement avec celui-ci.

6. Dispositif pour mettre en œuvre le procédé suivant les Revendications 1 à 5, comprenant une broche tubulaire (30) qui traverse axialement la matière tubulaire (32), une buée (36) pour saisir l'extrémité plissée de cette matière tubulaire et qui recule au cours de ce plissage, ainsi que des organes de plissage qui exercent sur la surface extérieure de cette matière tubulaire (32) une composante de force qui tourne autour d'un point fixe de l'axe (48) de cette matière tubulaire et qui est dirigée à l'encontre de ladite butée, caractérisé en ce que les organes de plissage sont réalisés soit sous forme d'au moins une buse soufflante tournant autour d'un point fixe de l'axe (48) de la broche, inclinée par rapport à cet axe et pouvant être reliée à une source d'air comprimé (22), soit sous forme d'une couronne de buses soufflantes (40, 40', 40'') régulièrement réparties autour de l'axe de la broche et inclinées par rapport à cet axe (48) autour d'un point fixe de celui-ci, et qui peuvent être réglées progressivement dans le sens de l'ouverture ou de la fermeture.

7. Dispositif selon la Revendication 6, caractérisé en ce que l'angle d'inclinaison des buses soufflantes (60) tournant autour d'un point fixe de l'axe de la broche est réglable par rapport à cet axe.

8. Dispositif selon l'une ou l'autre des Revendications 6 ou 7, caractérisé en ce que la buse soufflante tournant autour d'un point fixe autour de l'axe de la broche est constituée par une buse plate (40).

9. Dispositif selon la Revendication 8, caractérisé en ce que la buse (40) est disposée de façon que la dimension longitudinale de son ouverture transversale (50) forme un angle aigu par rapport à un plan transversale traversé par l'axe de la broche.

10. Dispositif selon la Revendication 9, caractérisé en ce que l'angle aigu est réglable.

11. Dispositif selon la Revendication 6, caractérisé en ce que les laps de temps, au cours desquels au moins deux buses soufflantes réparties autour d'un point fixe de l'axe de la broche sont réglables dans le sens de l'ouverture ou de la fermeture, se recouvrent l'un l'autre.

12. Dispositif selon l'une ou l'autre des Revendications 6 ou 11, caractérisé en ce qu'il comporte un élément de valve commandé en rotation par la source d'air comprimé pour commander l'ouverture et la fermeture des buses soufflantes.

Fig.1

0 031 892

Fig. 2

48

34 50

22

40

32

10

Fig. 3

Fig. 4